# EUROPEAN PATENT SPECIFICATION

(11) **EP 4 078 403 B1**
(45) Date of publication and mention of the grant of the patent: **07.08.2024**
(21) Application number: 20817252.8
(22) Date of filing: 30.11.2020
(51) Int. Cl.: G06F 16/44, G06F 16/909

(54) **MESSAGE DISTRIBUTION SERVICE**
NACHRICHTENVERTEILDIENST
SERVICE DE DISTRIBUTION DE MESSAGES

(30) Priority: 17.12.2019 US 201916717091; 07.07.2020 GB 202010399; 31.08.2020 US 202017007777
(43) Date of publication of application: 26.10.2022
(73) Proprietor: Rhizomenet Pty. Ltd., Melbourne VIC 3000 (AU)
(72) Inventor: WANG, Yue, Melbourne, Victoria 3000 (AU)
(74) Representative: Marks & Clerk LLP
(86) International application number: PCT/EP2020/083943
(87) International publication number: WO 2021/121932

(56) References cited:
- EP-A1- 3 547 082
- US-A1- 2018 286 137
- US-A1- 2019 107 990

## Description

### Field of the Invention

The present invention relates to a location-based message distribution service for distributing messages to a multiplicity of end-user devices. In particular, though not necessarily, the invention relates to such a service for delivering messages to mobile end-user devices where the messages are presented on a display using augmented reality. The invention also relates to augmented reality displays and methods for displaying augmented reality images.

### Background

The majority of messaging applications provided for end-user mobile devices such as smartphones are essentially agnostic in a geographical sense. A user will receive a message sent to him or her regardless of their location. However, users of messaging services are often using devices with access to additional data, such as location. Messaging services have begun to take advantage of this, offering features such as location tagged messages (i.e. messages associated with a particular location).

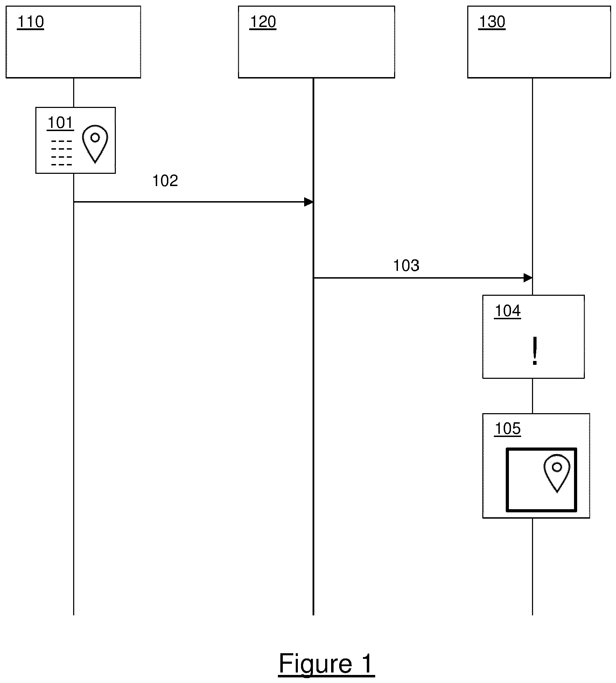

An example message flow for a single message in such an app is shown in Figure 1. The message flow involves a sending client 110, a server 120, and a receiving client 130. In step 101, the sending client 110 creates a message, which includes details of a particular location. In step 102, the sending client 110 sends this message to the server 120. In step 103, the server 120 forwards this message to the receiving client 130, which notifies the user in step 104. The receiving client displays the message in step 105 in some kind of location-identifying view, e.g. on a map or in an AR view, at a location corresponding to the associated location. The message may only be available for viewing (i.e. the message content delivered to the client) when the receiving client 120 is present at or in the vicinity of the associated location.

US2019/107990 describes systems and methods for sharing virtual objects as message objects in an Augmented Reality (AR) environment. Physical locations may be associated with message objects such that the objects can only be viewed by a user present at those locations.

### Summary

The present invention flows from a realisation that some message creators may want to attach multiple locations to a single message. With conventional location-based messaging services, this would require the sending of the message multiple times, each with a different location. This places a large burden on the message sender, particularly where there are many hundreds or even thousands of locations associated with a message. The conventional services also give rise to the problem that a message with multiple locations will cause corresponding multiple notifications to be made to the receiving client. This is likely to be confusing for the receiver and would inevitably reduce the quality of the user experience.

According to a first aspect of the present invention there is provided a computer-implemented method of distributing location-based message contents over a messaging system and that are displayable on consumer devices present at associated locations. The method comprises, for each message of a set of messages, obtaining a message content and a message location search term, submitting the message location search term to a web mapping service so that a service application programming interface (API) searches with the message location search term, and receiving a result list including a plurality of message locations corresponding to the message. The method further comprises adding the message content and the plurality of message locations to a message distribution database or set of linked databases that is or are searchable by location, receiving from a consumer device a first consumer update request including a location of the consumer device or a consumer defined location, searching the message distribution database or the set of linked databases using the consumer device location or consumer defined location to identify, for each of one or more of said messages, a single message location that is within a first predefined range of the consumer device location or consumer defined location and / or that is closest to the consumer device location or consumer defined location, and sending the identified single message location(s) to the consumer device.

Embodiments provided for by the invention allow for a greatly reduced messaging flow when providing multi-location messages over a location-based messaging service, as well as simplifying the multi-location message creation and management processes.

The method may comprise sending the message content to the consumer device if either (a) said consumer device location or consumer defined location is within a second predefined range of a sent identified message location, or (b) the consumer device sends a further consumer update request containing a new location of the consumer device or a consumer defined location that is within said second predefined range of a sent identified message location. The method may further comprise receiving the message content at the consumer device, and displaying the message content on a display as augmented reality content. The display may display real-time video captured by a device camera. Alternatively, the display may be a transparent or semi-transparent display.

The step of obtaining a message location search term may comprise receiving a search term from a message sending client, together with said message content.

The method may comprise receiving the identified message location(s) at the consumer device and displaying these on a device display as an overlay on a map.

The method may comprise, for an identified message, defining a message appearing time such that message content sent to a consumer device is only available to the consumer after the appearing time.

The method may comprise, for an identified message, defining a message disappearing time such that message content sent to a consumer device is only available to the consumer prior to the disappearing time.

The method may comprise defining for one or more of the messages of said set of messages a passcode such that message content sent to a consumer device is only available after the passcode has been input to the consumer device.

The method may comprise defining for one or more of the messages of said set of messages a collection number defining the number of times that a message content can be collected by consumer devices at a given one of the defined locations, or defining a number of users that can collect a message content with their respecting consumer devices.

The step of searching the database may comprise identifying, for each of one or more of said messages, multiple message locations within said first predefined range and selecting as said single location the closest location to the consumer location or consumer defined location.

According to an embodiment of the invention the method may involve presenting message content as visually augmented reality content on a display of a user device, the display also presenting real-time video captured by a camera or the display being a transparent display. The method comprises, for message content associated with multiple locations, identifying a location closest to the user device, sending to the user device a notification identifying said closest location, displaying said closest location on said display, making a determination that the user device is present at or near said closest location, sending said message content to the user device, and presenting the message content as visually augmented reality on said display such that the content appears overlaid on said closest location either in a captured video image or a real view behind a transparent display.

The step of displaying said closest location on said display may comprise presenting the received message notification as visually augmented reality on said display such that the received message notification appears overlaid on a captured video image or a real view behind a transparent display.

The method may comprise, for said message content, defining a message appearing time such that message content sent to the user device is only available to the device after the appearing time.

The method may comprise, for said message content, defining a message disappearing time such that message content sent to the user device is only available to the device prior to the disappearing time.

The method may comprise, for said message content, defining for said message content a passcode such that the message content sent to the user device is only available after the passcode has been input to the device.

The steps of identifying a location closest to the user device, sending to the user device a notification identifying said closest location, and sending said message content to the user device, may be carried out by a server or servers.

The step of making a determination that the user device is present at or near said closest location may be carried out at said server or servers, and said step of sending said message content to the user device may be carried out in response to that determination.

The steps of sending to the user device a notification identifying said closest location and sending said message content to the user device may be carried out substantially concurrently, and said step of making a determination that the user device is present at or near said closest location may be carried out at the user device.

According to an embodiment of the present invention the method may comprises obtaining real-time augmented image data of an environment of the device, the data comprising image data augmented with depth information, identifying within the augmented image data a display surface of the environment and an orientation of that surface, configuring content data representing said content using the identified display surface and it's orientation to align and orient the content with the identified display surface, and displaying the configured content data and the image data on the display such that the content appears to be present on said display surface.

The real-time augmented image data may be obtained via an operating system API or native layer of the device.

The augmented real-time image data may be captured from the environment using one or more cameras and one or more LiDAR scanners of the electronic device. Data obtained from the camera or cameras and the LiDAR scanner may be aligned using one or more motion sensors of the device.

The step of configuring content data representing said content may comprise scaling and setting a viewing perspective of the data.

The display may be a transparent display. The step of configuring content data representing said content may comprise configuring the content so that it is in focus on said display surface.

Said content may be content of a message received by the electronic device, or content downloaded to the device, or content generated at the device.

The step of identifying within the augmented image data a display surface may comprise determining a display surface from received or stored data and searching the augmented image data for that display surface.

Said content may be one or a combination of text data, picture data, video data.

A computer program stored on a non-transitory computer storage medium may be configured to implement the method of the invention and cause a computer device to obtain real-time augmented image data of an environment of the computer device, the data comprising image data augmented with depth information, identify within the augmented image data a display surface of the environment and an orientation of that surface, configure content data representing said content using the identified display surface and it's orientation to align and orient the content with the identified display surface, and display the configured content data and the image data on a display of the computer device such that the content appears to be present on said display surface.

### Brief Description of the Drawings

Figure 1 is a diagram of message flow according to an exemplary prior art method;
Figure 2 is a diagram of message flow in an exemplary method;
Figure 3 is a network diagram showing connections between the entities involved in Figure 2;
Figure 4 is an exemplary display of an augmented reality interface of a receiving client;
Figure 5A illustrates schematically image data representing an environment;
Figure 5B illustrates augmented image data comprising the image data of Figure 5A augmented with depth data;
Figure 6 illustrates an image on a device display generated using the image data of Figure 5A and content data representing content;
Figures 7A and 7B illustrate image data and augmented image data representing an outdoor environment; and
Figure 7C illustrates an image on a device display generated using the image data of Figure 7A and content data representing content.

### Detailed Description

The following disclosure is concerned with a messaging application or "app" in which messages may be associated with location data, and where users can view messages in a geographic region (e.g. close to the user) via an interface. The interface may display a list of messages in the geographic region, display the messages overlaid on a map, or display the messages in an "augmented reality" view (i.e. with the message appearing to float in front of the associated location on displayed graphics, e.g. as captured by a device camera). More particularly, the disclosure is concerned with messages that are each associated with multiple locations, possible even a very large number of locations. It will of course be appreciated that an augmented reality (AR) message can be displayed using a number of different approaches, e.g. under a displayed location in the case where the device is in the basement of a building or on a location as a virtual billboard.

Consider the example of a chain of supermarkets which wishes to use the location-based messaging service to provide a given message content to customers in their marketing list, with the location tagged as the supermarket stores in the chain. The message content might include for example a discount code that a receiver can use to obtain a discount on items purchased (e.g. "Celebrate Valentine's Day; discount code 12345").

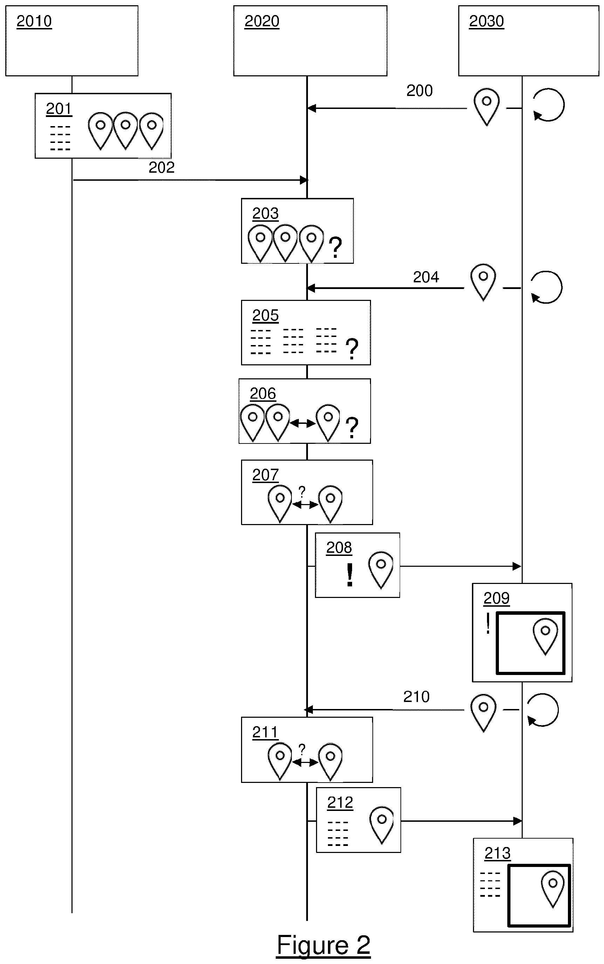

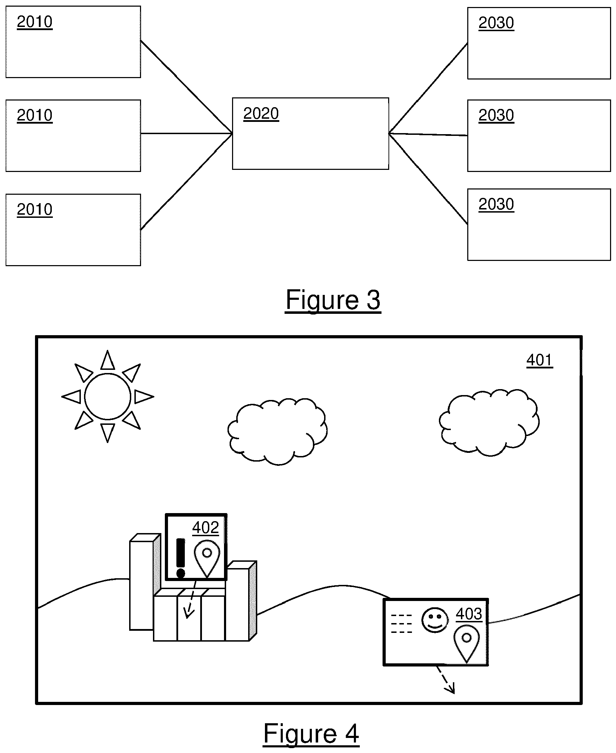

Figure 2 illustrates a messaging flow that can be used for this purpose, whilst Figure 3 shows an exemplary network on which the method could be implemented. The network comprises a plurality of sending clients 2010, a server 2020 (which may be a server cluster or server cloud), and a plurality of receiving clients 2030. The sending client may also be capable of receiving messages, and the receiving client may also be capable of sending messages - the names simply refer to their roles in the method presented. The clients may be smartphones, tablets, PCs, wearables including wrist worn devices, etc. Connectivity between clients and the server is provided by any suitable communications network(s). For example, the clients may be connected to the Internet via cellular or WiFi networks, whilst the server may be coupled to the Internet via an enterprise network and a broadband network.

Referring again to Figure 2, in step 200, each receiving client 2030 periodically sends its location to the server 2020. This might result from a user opening the messaging app on his or her device, or selecting a refresh option. Upon receipt of the message from the receiving client, the server will identify any "personal" messages previously sent to the receiving client, e.g. by the sending clients 2010. If these have a location associated with them, and if the receiving client is not in that location, only a message notification will be sent (possibly with certain other data such as a location "card" including, for example, a location street address). This might indicate the location of the message which can be displayed on a map at the receiving client's device or as an item in a message list. If the receiving client is however in the associated location (or more typically with a given range of that location, e.g. 100m), the message content will be sent to the receiving client such that it can be displayed on the receiving device, e.g. using an augmented reality (AR) approach.

In step 201, one of the sending client 2010 chooses to create a "multi-position" message, containing message content that is to be associated with a set of locations (this is called a "multi-position message", as it is associated with multiple locations).

In step 202, the sending client 2010 sends this multi-position message to the server 2020. This may be done using a "business platform" interface having a field or fields for the message content and a field identifying the locations, e.g. "supermarket name".

In step 203, the server identifies the multiple locations associated with the information provided by the sending client in the location field. These might be, for example, the addresses of stores in the chain and their geographic coordinates, i.e. latitude and longitude. The server may perform these steps using an appropriate API, such as the Google^{™} mapping service API. The resulting list of locations are added to an "Atlas" database, together with links to the associated message content. As further mutliposition messages are sent by the same or different sending clients, the respective locations and content links are identified by the server and the Atlas updated. The result is an Atlas database containing multiple locations associated with various message content. These messages are referred to here as "business multi-position messages", with the intended recipients being referred to as consumers (e.g. the users of the receiving clients are considered to be consumers of the business multi-position messages). Businesses may pay a subscription to use this service (via their respective sending clients 2010), or may pay on a per-message basis, or using some other payment model.

It will be appreciated that the Atlas creation process is dynamic, and that the location of step 203 in the flow is merely exemplary.

In step 204, the server 2020 receives a further location update message from a given receiving client 2030. Once again, the server will identify any personal messages destined for the receiving client and deliver a notification and or message content as described above.

In step 205, the server will also determine which if any of the multi-position messages are intended for the receiving client 2030. If the number of multi-position messages is small, all messages may be identified. However, it is more likely that a subset of the complete multi-message set will be identified. This subset may be identified by, for example, matching metadata associated with respective messages (e.g. submitted by the sending client with the message request) against receiving client metadata (e.g. user behaviour, stated preferences, etc).

In steps 206 and 207, the server determines which of the identified (intended) messages should actually be notified or sent to the receiving client. For each of the identified multi-position messages, the server determines at step 206 the location associated with that multi-position message that is closest to the client. The server then determines 207, for each of those locations, whether the location is within a "notification distance" of the client, and whether it is within a "sending distance" of the client (where the notification distance is greater than the sending distance, e.g. 50km notification distance and 100m sending distance). Alternatively, the two substeps may be performed in the opposite order - e.g. for each multi-position message the server first determines whether there are any locations within the notification distance and/or the sending distance, and then, for each message having at least one location within the notification distance, the server determines which location associated with that message is the closest.

In this example, the closest location is within the notification distance, so in step 208, the server sends a notification of the multi-position message to the receiving client. This notification comprises at least information regarding the closest location of the multi-position message, and may comprise additional data such as a message summary and/or the identity of the message sender. In step 209, the receiving client notifies the user of the closest location of the multi-position message, e.g. by display on a map or on an augmented reality display (as described in further detail later). At this stage, the user is aware that there is a message "waiting for them" at a particular location, but cannot access the contents of the message until they are closer to the location, i.e. within the sending distance.

In step 210, the receiving client sends a further location update, and in step 211 the server repeats steps 206 and 207 for this further location update, i.e. identifying the closest location of each multi-position message, and determining whether it is within the notification and/or sending distance.

In this example, the receiving client is within the sending distance, so in step 212, the server sends the message content of the multi-position message to the client, together with information regarding the closest location of the multi-point message (which may be a reference to the notification sent in step 207). In step 213, the receiving client displays the message to the user in an augmented reality interface. This may require the user to select a notification displayed in the AR interface, which then brings up the message contents.

Steps 206 (determining the closest location) and 207 (determining whether the closest location is within the notification and/or sending distance) will be performed each time the receiving client sends a location update, and step 205 will also be repeated to identify any new messages (which may be done in response to a location update, on a schedule, or in response to some other event).

In step 205, the server may only identify messages that have not yet been sent to the receiving client, and in step 206 the server may only consider the sending distance when determining whether to send a message or notification for a message which has already been notified to the receiving client.

If a location update places the receiving client within sending distance of a message which has not yet been notified to that client, then the server may include the message contents with the notification (effectively proceeding directly to step 212 from step 207).

In step 206, where a receiving client has already been notified of a multi-position message, the server may determine whether another of the locations is closer to the client than the previous closest location, and if so the server may resent the notification if that closest location is within the notification distance.

The information representing the location may be GPS coordinates or another suitable representation.

Instead of determining notification distance based on the actual location of the receiving client, the receiving client may send a request for notifications around a user-defined location, and in steps 206 and 207 the server may determine the "closest location" and "notification distance" based on that user-defined location. This may be useful, for example, if a user wishes to determine whether there are any messages close to a location they are travelling towards, before they actually get there. The user may identify the user-defined location by swiping across a displayed map. The "notification distance" may also be user-definable, i.e. provided in a location update by the receiving client, e.g. a user may define the distance by enlarging or reducing the size of a displayed map area. The "sending distance" may still be determined for the actual location of the device, even if the receiving client provides a user-defined location.

The message contents may include multimedia content, e.g. any combination of text, images, video, audio, additional location data (i.e. a location other than the associated location), etc. The message contents may include only static content (i.e. the same for each location of the set), or it may include both static and dynamic content, where the dynamic content depends on which of the set of associated locations is associated with the single-position message generated by the server. For example, the message contents may include a first image which is a product advertisement (static content), and a set of second images which is a picture of the storefronts of the associated locations (dynamic content), defined such that only the picture for the associated location will be sent by the server to the receiving client. Alternatively, the message contents may include text containing both static and dynamic content, e.g. "Come to your local shop at ((address)) for great deals today!", where the data sent to the server comprises a lookup table of addresses for each of the set of associated locations, and the server substitutes the relevant address for "((address))" in the message contents prior to sending the single-position message to the receiving client.

While the above example has referred to a "sending client" and a "server", the multi-position messages may be directly created at the server, rather than originally obtained from a sending client. For example, this may occur in a setup where an advertiser instructs the operator of the server to generate a message on their behalf.

In steps 209 and 213, the message or message notification is displayed on an augmented reality display. An augmented reality display is one which overlays display graphics on a real world environment. There are broadly two types of augmented reality displays. In the first type, display graphics are overlaid on an image (generally a live image) taken from a camera. This is the type commonly seen on AR apps for smartphones. In the second type, graphics are displayed on a transparent or translucent display, which the user can look through to see the real world beyond. This type is used for AR headsets, "smart glasses", or "smart windows", and has been proposed for "smart contact lenses". The above disclosure could apply to any of the AR examples given, and will also be applicable to future AR technologies with appropriate modification including holographic displays.

Message content may be associated with a passcode, such as a password or PIN code, such the content can only be viewed or accessed after a receiver has entered the passcode into his or her device. The passcode may be derived from biometric data such as a fingerprint or the image of a face. In the case of a password, the user's device may provide a means for recovering a forgotten password, such as by way of displaying a password hint.

Figure 4 shows an example AR interface displaying messages and message notifications according to the above examples. The AR interface comprises a "real world view" 401 (i.e. a camera feed, or a transparent display which allows viewing of the real world directly), over which graphics are presented representing a message notification 402, and a message 403. The message notification corresponds to a first multi-position message for which the closest location is only within the notification distance, and the message 403 corresponds to a multi-position message for which the closest location is within the sending distance. Each of the message notification 402 and the message 403 are displayed in a location corresponding to the location associated with the respective message. The message 403 is displayed including a selection of the message content, and may include options to view further message content (e.g. if there is more than can be shown in the display). The message notification 402may of course not be displayed on the AR interface and may be visible only as an overlay (e.g. pin) on a map view or in a message notification feed list.

For the purpose of displaying a received message, known AR applications tend to be quite limited in the positioning of the message on the display or screen, and typically display the message at a fixed location on the display or screen, e.g. top left or bottom right. In order to make a messaging service more relevant and interesting to users, more flexible display solutions are desirable.

The following disclosure is concerned with a messaging application or "app" in which messages may be associated with location data, and where users can view messages in a geographic region (e.g. close to the user) via an interface. An example of such an application is the ZOME^{™} app available on the Apple App Store^{™} and GooglePlay^{™}.

The recently launched Apple iPad Pro^{™} is provided with a Light Detection and Ranging (LiDAR) scanner that is capable of measuring distances to surrounding objects up to 5m away at nano-second speeds. The device's processor is able to tightly integrate data generated by the LiDAR scanner with data collected by the devices cameras and motion sensors. It is expected that other devices including smartphones will in the near future be provided with LiDAR or other scanners (such as ultrasonic scanners) to enable the capture of 3D aspects of an environment. Systems may alternatively or additionally utilise multiple spaced apart cameras to capture images with depth information. It can also be expected that the range at which scanners operate will increase over time from the iPad's current 5m range.

In order to make use of LiDAR and other data, e.g. camera data etc, Apple^{™} provides app developers with a software development kit (SDK) that consists of tools used for developing applications for the Apple iOS^{™}. In common with other vendors, the Apple SDK includes an application programming interface (API) which serves as a link between software applications and the platform they run on. APIs can be built in many ways and include helpful programming libraries and other tools.

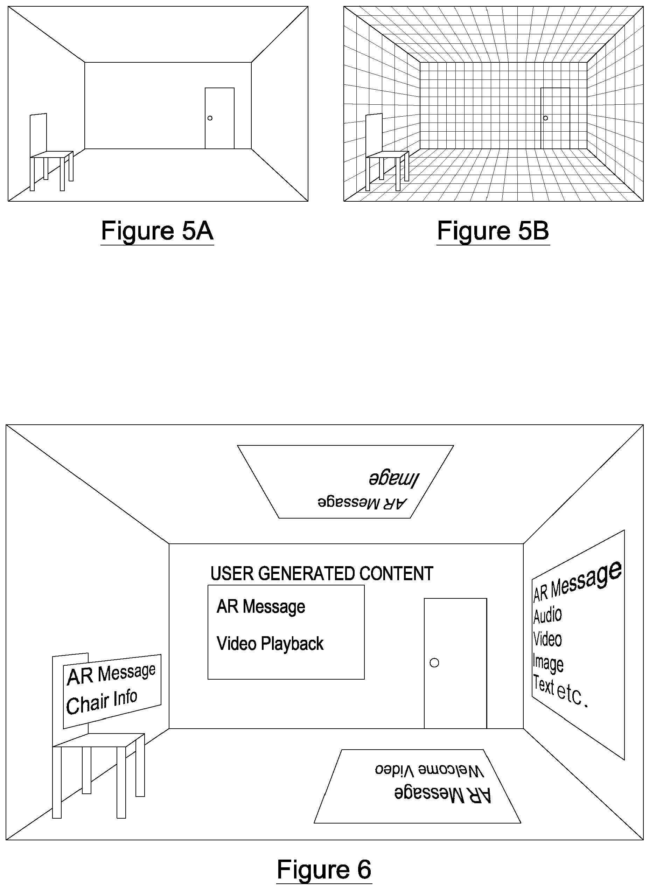

The introduction and development of this new technology makes possible a new message display paradigm. Figure 5A illustrates by way of example a view of a room captured by a camera or cameras of a device such as a smartphone. This does not contain depth information. However, such depth information can be captured by a LiDAR scanner of the device. Using motion sensors of the device, the captured depth information can be aligned with the image data. The combined data is illustrated schematically in Figure 5B. It will be appreciated that the image data of Figure 5B may be captured in essentially real time and is dynamically adjusted as the device and camera(s) move. Of course, the device's display may display only the captured image data with the depth information being essentially hidden. It is of course possible to display the view of Figure 5B or some other AR view if desired.

In the case of Apple iOS, it is understood that the SDK allows a developer to create an app that obtains from the system image data that is a composite of data provided by a device's camera and depth data provided by the LiDAR scanner. The two are aligned using motion sensor data. Thus, for example, image data may be obtained that has, for each pixel of an image, a depth or distance value.

Returning to the location-based messaging service discussed above, e.g. ZOME^{™}, a user of the device may be sent a message having as its location the location of the room. Whilst not in the room, the user will not be able to view the message content although might be provided with in indication that a message is available in the room. In the present context, the message location may be further specified as being on a particular surface of the room. This might be for example a whiteboard or wall mounted screen within the room. In that case of course, the sender of the message may be required to identify the display location. Alternatively, the recipient may specify a display location for his or her incoming messages. For example, a received message may at first float in the environment when viewed on a display, with the user being able to pin that message to a surface by dragging the message onto the surface.

When the user enters the room and views the room on the device display, an appropriate algorithm running on the device's processor analyses the image data to identify the specified display location, e.g. the whiteboard. This may also utilise the data obtained by the LiDAR scanner and motion sensors. In any case, using all of this data, the device configures the message content for display on the device display so that, when presented, it appears as if it is actually on the whiteboard surface.

Moreover, as the camera moves, the message content remains fixed in position relative to the whiteboard. Even where the display surface is at an angle to the device, e.g. see the whiteboard on the right hand wall of Figure 6, the message content appears in the correct orientation. The content is also stationary in the sense that, as the camera moves, the content remains fixed relative to the display surface. Considering for example the content fixed to the floor and ceiling of the room of Figure 6, the appears upside down from the current position of the device, but as the user walks around the messages towards the door, with the camera still pointed at the messages, the user will see the messages turning until they are the right way up.

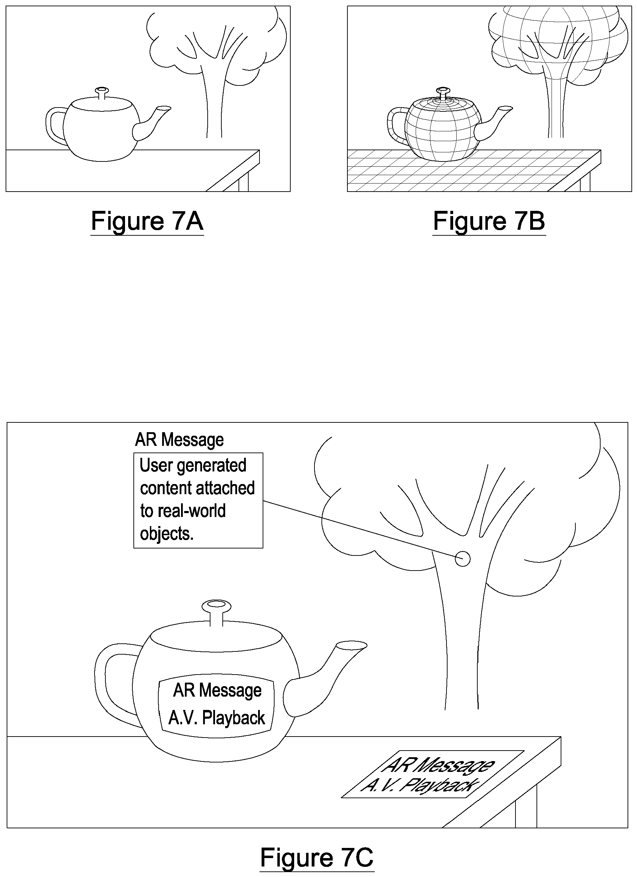

Referring now to Figure 7A, this illustrates an outdoor image captured by a camera or cameras of a device. Figure 7B illustrates schematically the combination of the image data of Figure 7A with data obtained using a LiDAR scanner of the device and using data provided by motion sensors.

Figure 7C illustrates message content that appears to be pinned or tagged to a tree, as well as a message pinned to a teapot. The algorithm running on the device may allow the user to move a message to another location in this environment, e.g. by dragging it from one location to another. In doing so, the algorithm re-calculates the content data so that its size and orientation is appropriate for the new surface. Figure 7C illustrates a message dragged from the teapot to the table surface from which this change is apparent (one might assume that the message on the teapot will not appear after it has been moved). It will also be appreciated that if the object providing the display surface is moved within the environment, the message will move with the object and will be dynamically reconfigured accordingly.

Whilst the message content might be simple text, e.g. "remember to buy milk", it can also be images, video (with accompanying audio) etc. It may also be content that is configured to interact with the display surface. One could image for example, the case where the display surface is a painting, and the message content is an image overlaid on the painting, e.g. the content is a bird flying back and forth over a landscape within the painting.

Whilst the proposal above relates to a device having a camera and a display, the proposal can also be applied to transparent displays such as spectacles. In this case, a camera is still likely required to recognise a display location, but the content is presented as AR content over the transparent display. Other devices that might be used include smart windows such as vehicle windscreens. The proposal is also applicable, by way of example, to smart watches.

## Claims

1. A computer-implemented method of distributing location-based message contents over a messaging system and that are displayable on consumer devices present at associated locations, the method comprising:
for each message of a set of messages, obtaining a message content and a message location search term; submitting (202)
the message location search term to a web mapping service so that a service application programming interface (API) searches with the message location search term;
receiving a result list including a plurality of message locations corresponding to the message; and;
adding (203) the message content and the plurality of message locations to a message distribution database or set of linked databases that is or are searchable by location;
receiving (204) from a consumer device a first consumer update request including a location of the consumer device or a consumer defined location;
searching the message distribution database or the set of linked databases using the consumer device location or consumer defined location to identify, for each of one or more of said messages, a single message location that is within a first predefined range of the consumer device location or consumer defined location and / or that is closest to the consumer device location or consumer defined location; and
sending (208) the identified single message location(s) to the consumer device.

2. A method according to claim 1 and comprising:
sending the message content to the consumer device if either
(a) said consumer device location or consumer defined location is within a second predefined range of a sent identified message location, or
(b) the consumer device sends a further consumer update request containing a new location of the consumer device or a consumer defined location that is within said second predefined range of a sent identified message location.

3. A method according to claim 2 and comprising:
receiving the message content at the consumer device; and
displaying the message content on a display as augmented reality content.

4. A method according to claim 3, wherein said display displays real-time video captured by a device camera.

5. A method according to any one of the preceding claims, wherein said display is a transparent display.

6. A method according to any one of the preceding claims, wherein said step of obtaining a message location search term comprises receiving a search term from a message sending client, together with said message content.

7. A method according to any one of the preceding claims and comprising receiving the identified message location(s) at the consumer device and displaying these on a device display as an overlay on a map.

8. A method according to any one of the preceding claims and comprising, for an identified message, defining a message appearing time such that message content sent to a consumer device is only available to the consumer after the appearing time.

9. A method according to any one of the preceding claims and comprising, for an identified message, defining a message disappearing time such that message content sent to a consumer device is only available to the consumer prior to the disappearing time.

10. A method according to any one of the preceding claims and comprising defining for one or more of the messages of said set of messages a passcode such that message content sent to a consumer device is only available after the passcode has been input to the consumer device.

11. A method according to any one of the preceding claims and comprising defining for one or more of the messages of said set of messages a collection number defining the number of times that a message content can be collected by consumer devices at a given one of the defined locations, or defining a number of users that can collect a message content with their respecting consumer devices.

12. A method according to any one of the preceding claims, wherein said step of searching the database comprises identifying, for each of one or more of said messages, multiple message locations within said first predefined range and selecting as said single location the closest location to the consumer location or consumer defined location.

## Patentansprüche

1. Computerimplementiertes Verfahren zum Verteilen, über ein Nachrichtensystem, von ortbasierten Nachrichteninhalten, und die auf Verbrauchervorrichtungen an zugehörigen Orten anzeigbar sind, wobei das Folgendes Verfahren umfasst:
für jede Nachricht einer Reihe von Nachrichten,
Erhalten eines Nachrichteninhalts und eines Suchbegriffs für den Nachrichtenort;
Übermitteln (202) des Suchbegriffs für den Nachrichtenort an einen Web-Mapping-Dienst, damit eine Anwendungsprogrammierschnittstelle (API) des Dienstes mit dem Suchbegriff für den Nachrichtenort sucht;
Empfangen einer Ergebnisliste, die eine Vielzahl von Nachrichtenorten, die der Nachricht entsprechen, einschließt; und;
Hinzufügen (203) des Nachrichteninhalts und der Vielzahl der Nachrichtenorte zu einer Nachrichtenverteilungsdatenbank oder einer Reihe von verknüpften Datenbanken, die nach Orten durchsuchbar ist oder sind,
Empfangen (204), von einer Verbrauchervorrichtung, einer ersten Verbraucheraktualisierungsanfrage, die einen Ort der Verbrauchervorrichtung oder einen vom Verbraucher definierten Ort einschließt;
Durchsuchen der Nachrichtenverteilungsdatenbank oder der Reihe verknüpfter Datenbanken unter Verwendung des Orts der Verbrauchervorrichtung oder des vom Verbraucher definierten Orts, um für jede einer oder mehrerer der Nachrichten einen einzelnen Nachrichtenort zu identifizieren, der innerhalb eines ersten vordefinierten Bereichs von der Verbrauchervorrichtung oder des vom Verbraucher definierten Ortes liegt und/oder der dem Ort der Verbrauchervorrichtung oder dem vom Verbraucher definierten Ort am nächsten ist; und
Senden (208) des oder der identifizierten einzelnen Nachrichtenorte an die Verbrauchervorrichtung.

2. Verfahren nach Anspruch 1 und Folgendes umfassend:
Senden des Nachrichteninhalts an die Verbrauchervorrichtung, falls entweder
(a) der Ort der Verbrauchervorrichtung oder der vom Verbraucher definierte Ort sich innerhalb eines zweiten vordefinierten Bereich eines gesendeten identifizierten Nachrichtenortes befindet, oder
(b) die Verbrauchervorrichtung eine weitere Verbraucheraktualisierungsanfrage sendet, die einen neuen Ort der Verbrauchervorrichtung oder einen vom Verbraucher definierten Ort enthält, der innerhalb des zweiten vordefinierten Bereichs eines gesendeten identifizierten Nachrichtenorts liegt.

3. Verfahren nach Anspruch 2 und Folgendes umfassend:
Empfangen des Nachrichteninhalts auf der Verbrauchervorrichtung, und
Anzeigen des Nachrichteninhalts auf einer Anzeige als Augmented-Reality-Inhalt.

4. Verfahren nach Anspruch 3, wobei die Anzeige ein von einer Kamera der Vorrichtung aufgenommenes Echtzeit-Video anzeigt.

5. Verfahren nach einem der vorangehenden Ansprüche, wobei die Anzeige eine transparente Anzeige ist.

6. Verfahren nach einem der vorhergehenden Ansprüche, wobei der Schritt des Erhaltens eines Suchbegriffs für den Nachrichtenort das Empfangen eines Suchbegriffs von einem Client, der die Nachricht sendet, zusammen mit dem Nachrichteninhalt umfasst.

7. Verfahren nach einem der vorhergehenden Ansprüche und umfassend das Empfangen des oder der identifizierten Nachrichtenorte auf der Verbrauchervorrichtung und Anzeigen derselben auf einer Vorrichtungsanzeige als Overlay auf einer Karte.

8. Verfahren nach einem der vorangehenden Ansprüche und umfassend, für eine identifizierte Nachricht, das Definieren eines Zeitpunkts für das Erscheinen der Nachricht, so dass der Nachrichteninhalt, der an eine Verbrauchervorrichtung gesendet wird, für den Verbraucher erst nach dem Zeitpunkt des Erscheinens verfügbar ist.

9. Verfahren nach einem der vorangehenden Ansprüche und umfassend, für eine identifizierte Nachricht, das Definieren eines Zeitpunkts für das Verschwinden der Nachricht, so dass der an eine Verbrauchervorrichtung gesendete Nachrichteninhalt für den Verbraucher nur vor dem Zeitpunkt des Verschwindens verfügbar ist.

10. Verfahren nach einem der vorhergehenden Ansprüche und umfassend das Definieren, für eine oder mehrere der Nachrichten der Reihe von Nachrichten, eines Passcodes, so dass der an eine Verbrauchervorrichtung gesendete Nachrichteninhalt erst verfügbar ist, nachdem der Passcode in die Verbrauchervorrichtung eingegeben wurde.

11. Verfahren nach einem der vorhergehenden Ansprüche und umfassend das Definieren, für eine oder mehrere der Nachrichten der Reihe von Nachrichten, einer Sammelnummer, die definiert, wie oft ein Nachrichteninhalt von Verbrauchervorrichtungen an einem bestimmten der definierten Orte gesammelt werden kann, oder das Definieren einer Anzahl von Verbrauchern, die einen Nachrichteninhalt mit ihren jeweiligen Verbrauchervorrichtungen sammeln können.

12. Verfahren nach einem der vorhergehenden Ansprüche, wobei der Schritt des Durchsuchens der Datenbank das Identifizieren, für jede einer oder mehrerer der Nachrichten, mehrerer Nachrichtenorte innerhalb des ersten vordefinierten Bereichs und das Auswählen, als den einzigen Ort, des Orts umfasst, der dem Verbraucherort oder dem vom Verbraucher definierten Ort am nächsten liegt.

## Revendications

1. Procédé mis en oeuvre par ordinateur de distribution de contenus de message basés sur l'emplacement *via* un système de messagerie, et qui sont affichables sur des dispositifs de consommateur présents à des emplacements associés, le procédé comprenant :
pour chaque message d'un ensemble de messages,
l'obtention d'un contenu de message et d'un terme de recherche d'emplacement de message ;
la soumission (202) du terme de recherche d'emplacement de message à un service de cartographie web de sorte qu'une interface de programmation d'application (API) du service effectue une recherche avec le terme de recherche d'emplacement de message ;
la réception d'une liste de résultats, incluant une pluralité d'emplacements de message correspondant au message ; et ;
l'ajout (203) du contenu de message et de la pluralité d'emplacements de message à une base de données de distribution de messages ou à un ensemble de base de données liées qui peut ou peuvent être interrogées par emplacement ;
la réception (204), de la part d'un appareil de consommateur, d'une première demande d'actualisation de consommateur incluant un emplacement de l'appareil de consommateur ou un emplacement défini par le consommateur ;
la recherche de la base de données de distribution de messages ou de l'ensemble de bases de données liées, en utilisant l'emplacement d'appareil de consommateur ou l'emplacement défini par le consommateur, pour identifier, pour chacun d'un ou plusieurs desdits messages, un emplacement de message unique qui est situé dans une première plage prédéfinie d'emplacement d'appareil de consommateur ou d'emplacement défini par le consommateur et/ou qui est le plus proche de l'emplacement d'appareil de consommateur ou de l'emplacement défini par le consommateur ; et
l'envoi (208) de l'(des) emplacement(s) de message unique(s) identifié(s) à l'appareil de consommateur.

2. Procédé selon la revendication 1, et comprenant :
l'envoi du contenu de message à l'appareil de consommateur si soit
(a) ledit emplacement d'appareil de consommateur ou l'emplacement défini par le consommateur se trouve dans une deuxième plage prédéfinie d'un emplacement de message identifié envoyé, soit
(b) l'appareil de consommateur envoie une nouvelle demande d'actualisation de consommateur contenant un nouvel emplacement de l'appareil de consommateur ou un emplacement de consommateur défini qui se trouve dans ladite deuxième plage prédéfinie d'un emplacement de message identifié envoyé.

3. Procédé selon la revendication 2 et comprenant :
la réception du contenu de message au niveau de l'appareil de consommateur ; et
l'affichage du contenu de message sur un affichage sous forme de contenu à réalité augmentée.

4. Procédé selon la revendication 3, dans lequel ledit affichage affiche une vidéo en temps réel capturée par une caméra de l'appareil.

5. Procédé selon l'une quelconque des revendications précédentes, dans lequel ledit affichage est un affichage transparent.

6. Procédé selon l'une quelconque des revendications précédentes, dans lequel ladite étape d'obtention d'un terme de recherche d'emplacement de message comprend la réception d'un terme de recherche de la part d'un client envoyant un message, ensemble avec ledit contenu de message.

7. Procédé selon l'une quelconque des revendications précédentes, et comprenant la réception de(s) l'emplacement(s) de message identifié(s) au niveau de l'appareil de consommateur et l'affichage de ceux-ci sous forme d'une superposition sur une carte.

8. Procédé selon l'une quelconque des revendications précédentes et comprenant, pour un message identifié, la définition d'un moment d'apparition du message de sorte que le contenu de message envoyé à un appareil de consommateur est accessible au consommateur seulement après le moment d'apparition.

9. Procédé selon l'une quelconque des revendications précédentes et comprenant, pour un message identifié, la définition d'un moment de disparition du message de sorte que le contenu de message envoyé à un appareil de consommateur est accessible au consommateur seulement avant le moment de disparition.

10. Procédé selon l'une quelconque des revendications précédentes et comprenant la définition, pour un ou plusieurs des messages dudit ensemble de messages, d'un code d'accès de sorte que le contenu de message envoyé à un appareil de consommateur est accessible seulement après que le code d'accès a été entré sur l'appareil de consommateur.

11. Procédé selon l'une quelconque des revendications précédentes et comprenant la définition pour un ou plusieurs messages dudit ensemble de messages d'un nombre de collecte définissant le nombre de fois qu'un contenu de message peut être collecté par des appareils de consommateur à un emplacement donné des emplacements définis, ou la définition d'un nombre d'utilisateurs qui peuvent collecter un contenu de message avec leurs appareils de consommateur respectifs.

12. Procédé selon l'une quelconque des revendications précédentes, dans lequel ladite étape de recherche de la base de données comprend l'identification, pour chacun d'un ou plusieurs desdits messages, d'emplacements de message multiples dans ladite première plage prédéfinie et la sélection en tant que dit emplacement unique de l'emplacement le plus proche de l'emplacement de consommateur ou de l'emplacement de consommateur défini.
